(19) Europäisches Patentamt
European Patent Office
Office européen des brevets

(11) **EP 2 749 898 B1**

(12) **FASCICULE DE BREVET EUROPEEN**

(45) Date de publication et mention
de la délivrance du brevet:
**04.01.2023 Bulletin 2023/01**

(21) Numéro de dépôt: **13199303.2**

(22) Date de dépôt: **23.12.2013**

(51) Classification Internationale des Brevets (IPC):
***G01S 7/02*** *(2006.01)*

(52) Classification Coopérative des Brevets (CPC):
**G01S 7/021**

(54) **PROCÉDÉ D'OPTIMISATION DE LA SURVEILLANCE OU SCRUTATION DE SIGNAUX PAR UN CAPTEUR**

VERFAHREN ZUR OPTIMIERUNG DER ÜBERWACHUNG ODER DER ABFRAGESIGNALE VON EINEM SENSOR

METHOD FOR OPTIMIZING MONITORING OR POLLING OF SIGNALS BY A SENSOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.12.2012 FR 1203615**

(43) Date de publication de la demande:
**02.07.2014 Bulletin 2014/27**

(73) Titulaire: **Thales
92400 Courbevoie (FR)**

(72) Inventeurs:
• **Battut, Thierry
92622 GENNEVILLIERS Cedex (FR)**
• **Heurguier, Dominique
92622 GENNEVILLIERS Cedex (FR)**

(74) Mandataire: **Atout PI Laplace
Immeuble "Visium"
22, avenue Aristide Briand
94117 Arcueil Cedex (FR)**

(56) Documents cités:
**US-A1- 2005 052 311    US-A1- 2006 227 035**

**Description**

L'invention concerne un procédé pour optimiser la stratégie de balayage des signaux ou de scrutation de signaux par des capteurs. Elle s'applique, par exemple, pour détecter et analyser des émissions électromagnétiques de type communication ou radar. L'optimisation nécessite la connaissance des paramètres techniques des modes d'émissions qui sont consignés dans une base de données dénommée référentiel technique.

Le problème posé dans ce domaine est de définir la stratégie de scrutation de signaux ou « scanning stratégie » d'un capteur, adapté à surveiller, intercepter, caractériser, identifier des signaux dans un contexte donné, c'est-à-dire à allouer fréquentiellement et temporellement l'utilisation de la bande d'analyse instantanée du capteur, ou BAI, afin de couvrir tout ou une partie du spectre très haute fréquence VHF, Ultra Haute Fréquence, UHF ou Supra Haute Fréquence SHF, tout en optimisant la probabilité d'interception (POI) des objets à surveiller ou émissions radioélectriques appartenant au spectre, ainsi que les performances des traitements d'identification et de caractérisation des émissions. L'efficacité de cette allocation de ressources dépend notamment des formes d'ondes à intercepter et, en particulier, des caractéristiques techniques concernant leur modulation ainsi que leur activité temporelle. Ces caractéristiques sont consignées dans un référentiel technique.

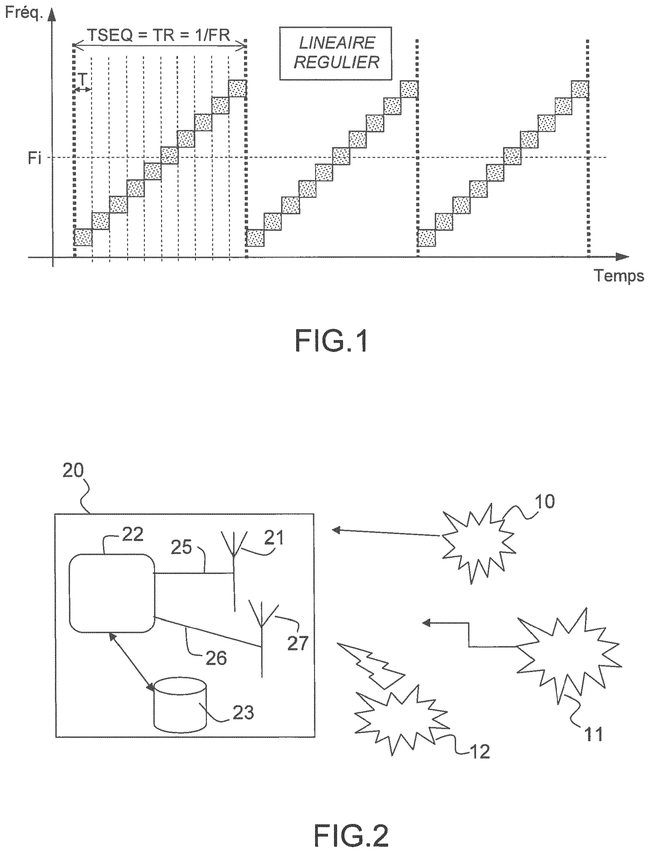

La figure 1 schématise un modèle de balayage dans un diagramme temps-fréquence utilisé habituellement pour scruter les signaux. Sur ce schéma on voit que le balayage s'effectue de manière linéaire et régulier, en suivant une période $T_R(1/F_R)$, selon une séquence qui dure Tseq et en faisant varier la fréquence F par palier ou trame d'écoute pour un objet. Cette technique peut conduire à une dégradation des performances d'identification/ caractérisation si la durée d'écoute n'est pas adaptée aux objets surveillés. Une autre limitation de cette technique est la dégradation de la probabilité d'interception POI si le temps de revisite, correspondant à l'écart temporel entre deux écoutes pour un même objet, n'est pas adapté à l'objet. Ceci est vrai, en particulier, pour les objets dont les émissions sont de type communication à Evasion de Fréquence ou EVF, ou radars à agilité de fréquence.

Le document US 2006/227035 décrit un procédé utilisé dans le domaine des radars pour une stratégie de « scanning d'un récepteur connaissant les caractéristiques des cibles.

Le document US 2010/0027715 décrit un procédé de stratégie de balayage de spectre en vue de l'interception d'émetteurs radar et de communication.

L'un des problèmes non résolu par l'art antérieur est de ne pas disposer d'une stratégie de balayage adaptée aux objets à surveiller, ce qui conduit, notamment, à une incapacité d'identifier ou de caractériser les objets pour lesquels la durée d'écoute ou le temps de revisite n'est pas adaptée. De même, il existe un besoin de disposer d'un procédé d'optimisation des procédés de balayage de capteurs destinés à surveiller des émetteurs.

Un des objectifs de la présente invention est de définir un procédé ayant une stratégie de balayage adaptée aux objets à traiter. L'adaptation nécessite la connaissance des paramètres techniques des modes d'émissions des objets. Ces modes d'émissions sont consignés dans une base de données dénommée référentiel technique : l'optimisation de la stratégie de balayage est donc indexée par le référentiel technique.

L'invention concerne un procédé pour déterminer des paramètres de surveillance d'un ensemble de bandes d'analyse instantanée BAI comprenant au moins deux objets à surveiller selon la revendication 1.

L'invention concerne aussi un procédé pour déterminer des paramètres de surveillance d'un ensemble de bandes d'analyse instantanée BAIj dans un système comprenant au moins deux objets à surveiller et ayant en mémoire au moins les caractéristiques des modes d'émission desdits objet et au moins un récepteur adapté à recevoir et analyser les signaux reçus caractérisé en ce qu'il comporte au moins les étapes suivantes :

a) découper le « plan de veille » en L bandes instantanées d'analyse BAIj,
b) déterminer la durée d'écoute $T_{Objeti}$ et le temps de revisite $TR_{Objeti}$ pour chacun des objets à surveiller en utilisant des informations de forme d'onde et d'accès réseau associées aux objets à surveiller contenues dans un référentiel technique,
c) déterminer ensuite la durée d'écoute Tj et le temps de revisite TRj optimal pour chacune desdites bandes instantanées BAIj en utilisant les valeurs des durées d'écoute $T_{Objeti}$, des temps de revisite $TR_{Objeti}$ des objets,
d) déterminer au moins un ordonnancement temporel de M bandes instantanées d'analyse avec M supérieur ou égale à L, afin d'obtenir une séquence temporelle Tseq des bandes instantanées d'analyse adaptée à vérifier au moins les points suivants : la séquence comporte l'ensemble des L bandes, la durée de la séquence $T_{seq}$ est inférieure à une durée $T_{seqmax}$.

Le temps de revisite TRj d'une bande BAIj est, par exemple, déterminé en fonction de la priorité associée cette bande.

La durée $T_{seq}$ peut être supérieure à une valeur seuil maximale, dans ce cas le procédé va diminuer la priorité d'une bande d'analyse instantanée et le temps de revisite, puis il exécute les étapes a) à d).

Si la durée de la séquence $T_{seq}$ est supérieure à la valeur $T_{seqmax}$, le procédé diminue la durée d'écoute d'une bande en supprimant un objet à surveiller, puis il exécute les étapes a) à d).

Selon une variante de mise en œuvre, il est possible d'utiliser une première voie de réception pour déterminer un premier ordonnancement temporel sur la durée d'écoute, et une deuxième voie de réception pour déterminer un deuxième ordonnancement temporel sur le temps de revisite.

L'invention concerne aussi un système comprenant au moins deux objets à surveiller et ayant en mémoire au moins les caractéristiques des modes d'émission desdits objets et au moins un récepteur adapté à recevoir et analyser les signaux reçus caractérisé en ce qu'il comporte un processeur adapté à exécuter les étapes du procédé selon l'invention décrites ci-avant.

D'autres caractéristiques et avantages de la présente invention apparaîtront mieux à la lecture de la description d'un exemple de réalisation donné à titre illustratif et nullement limitatif annexé des figures qui représentent :

- La figure 1, une illustration d'un modèle de balayage régulier,
- La figue 2, un schéma de dispositif adapté à mettre en œuvre le procédé selon l'invention,

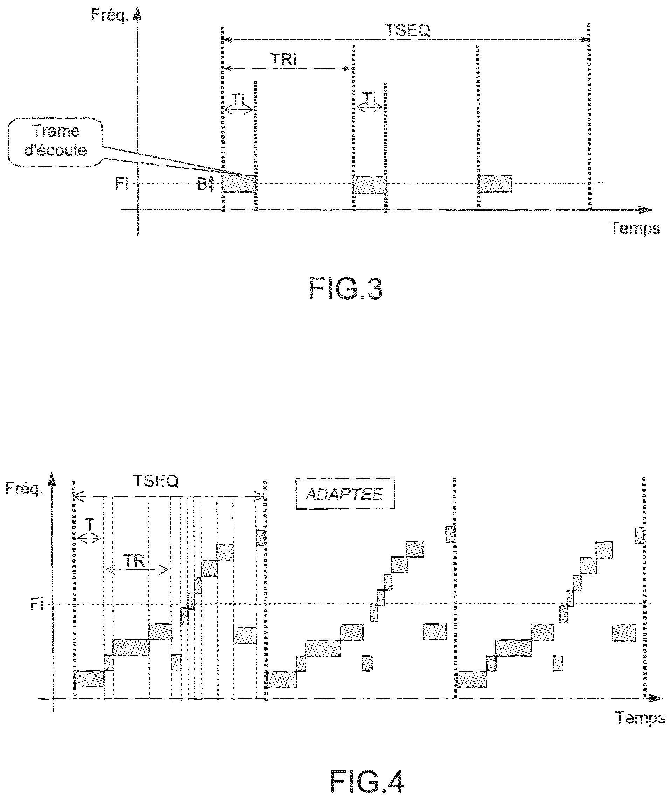

- La figure 3, une modélisation de la stratégie de balayage selon l'invention,
- La figure 4, une illustration d'un exemple de modèle de balayage selon l'invention.

Dans la suite de la description, un référentiel technique correspond à un ensemble de données comportant, pour un objet à surveiller au moins sa forme d'onde (modulation utilisée pour les signaux qu'il émet) et le type d'accès réseau. La durée d'une séquence Tseq correspond à une durée fixée et suffisante pour qu'un dispositif, ayant pour objectif de surveiller un ensemble d'objets, ait eu le temps d'écouter les signaux émis par tous les objets à surveiller. La durée de séquence obtenue est inférieure à la somme des durées d'écoute Ti pour chacun des objets à surveiller.

La figure 2 représente un exemple de système permettant la mise en œuvre du procédé selon l'invention. Le système 20 adapté à mettre en œuvre le procédé selon l'invention comprend, par exemple, une antenne 21 de réception, une voie de réception 25, un processeur 22 comprenant un logiciel adapté à traiter les signaux ou données reçues sur cette antenne, une base de données 23 mémorisant les informations sur les objets à surveiller, ou référentiel technique des émisisons radioélectriques.

Les objets à surveiller 10, 11, 12 émettent des signaux selon des plans de fréquence donnés (ensemble de bande de fréquence) et connus du dispositif selon l'invention.

Le processeur 22 du dispositif selon l'invention va réaliser le découpage de l'ensemble des bandes dans lesquelles émettent les N objets à surveiller en L bande capteurs, jointives dénommées BAI (Bande analyse instantanée).

Le processeur 22 va déterminer, un premier paramètre qui est la durée d'écoute $T_{Objeti}$ pour un objet i. Le processeur détermine aussi le temps de revisite $TR_{Objeti}$ qui correspond à l'intervalle temporel entre deux écoutes pour un objet i. Ainsi, la durée d'écoute $T_{Objeti}$ et le temps de revisite $T_{Objeti}$ nécessaire pour intercepter/identifier/caractériser les objets i appartenant à une bande d'analyse instantanée BAIj sont déterminés.

Le processeur 22 va pour cela exploiter les caractéristiques de la forme d'onde ou modulation et du type d'accès réseau d'un objet i qui sont contenus dans un référentiel technique mémorisé dans la base de données 23. Le type d'accès réseau est par exemple, de type Fréquence Fixe ou FF, évasion de fréquence ou EVF, accès temporel à division multiple ou TDMA (Time Division Multiple Access), etc. Un objet i émet dans une bande de fréquence [Fmin, Fmax], par exemple de 30MHz à 88 MHz.

Selon une autre variante de réalisation, le système comporte une antenne de réception multivoies de réception, par exemple deux voies de réception (21,25), (26, 27), qui lui permettent de faire des traitements en parallèle.

L'algorithme mis en œuvre par le processeur 22 est adapté à exécuter au moins les étapes suivantes :

1. Une première étape du procédé consiste en un découpage de l'ensemble des bandes dans lesquelles émettent les N objets à surveiller en L bandes capteurs, jointives, BAI, une bande comprend n (n < N) objets,

2. Au cours d'une deuxième étape, le processeur 22 va calculer la durée d'écoute $T_{Objet}$ et le temps de revisite $TR_{Objet}$ pour chacune des N objets à surveiller, en exploitant au moins les données mémorisées dans le référentiel technique et contenant les caractéristiques de tous les objets à surveiller,

3. Au cours d'une troisième étape, le processeur 22 va calculer la durée d'écoute et le temps de revisite pour chacune des bandes d'analyse instantané en fonction des n < N objets appartenant à la bande,

4. Au cours d'une quatrième étape facultative, le processeur va déterminer la priorité de chacune des bandes d'analyse instantanée en fonction d'une priorité donnée à un objet qui correspond au fait qu'un objet a besoin d'être surveillé à une fréquence plus importante que les autres objets,

5. Au cours d'une cinquième étape le processeur calcule la séquence optimale durée d'écoute Tj/temps de revisite TRj pour l'ensemble des bandes d'analyse instantanée,

6. Puis une sixième étape consiste à valider cette séquence.

Le détail des étapes mises en œuvre par le procédé selon l'invention est détaillé ci-après, pour un exemple donné à titre illustratif et nullement limitatif.

*Découpage du plan de veille en BAI*

Le plan de veille définit un certain nombre d'objets à intercepter et peut s'écrire sous la forme :

$$(1) \quad PlanDeVeille \ = \ \bigcup_{i=1}^{N} Objet_i$$

où U est l'opérateur union et N le nombre d'objets à intercepter. A chaque objet i correspond, par exemple, une plage fréquentielle [$Fmin_i$, $Fmax_i$] ou encore un ensemble de plages fréquentielles. Le plan de veille peut donc se réécrire sous la forme :

$$(2) \quad PlanDeVeille = \bigcup_{i=1}^{N} [F\min_i, F\max_i].$$

. Cela peut être par exemple l'union des 6 bandes suivantes :

- bande [30 MHz, 88 MHz] d'un premier objet de type radio militaire,
- bande [133 MHz, 174 MHz] d'un deuxième objet,

- bande [125 MHz, 250 MHz] d'un troisième objet de type radar bande basse,
- bande [380 MHz, 470 MHz] d'un quatrième objet de type PMR (private radio mobile),
- bande [465 MHz, 467 MHz] d'un cinquième objet de type radio-messagerie ,
- bande [1525 MHz, 1559 MHz] d'un sixième objet de type liaison satellite.

Connaissant la bande d'analyse instantanée (BAI) du capteur du dispositif selon l'invention le plan de veille est traduit sous forme d'union de L bandes d'analyse instantanée BAI :

$$(3) \quad PlanDeVeille = \bigcup_{i=1}^{L} BAI_i$$

U est l'opérateur union et L le nombre de Bandes d'analyse instantanée.

Les étapes décrites précédemment s'appliquent dans le cadre de largeur de bande fixe ou le cas de largeur de bande variable.

*Détermination de la durée d'écoute des objets*

Pour chaque objet i du plan de veille, la durée d'écoute optimale $T_{Objeti}$ est calculée afin de permettre son identification.

Cette durée d'écoute $T_{Objeti}$ est déterminée par le processeur 22 à partir de la table mémorisée dans la mémoire 23 du dispositif selon l'invention, qui donne en fonction de la forme d'onde de l'objet (modulation et ses paramètres technique), et du type d'accès réseau FF/EVF/TDMA/créneau ou burst, la durée nécessaire $T_{Objeti}$ pour l'identification de l'objet i avec une probabilité fixée, par exemple, de 95%. Cette table dépend des performances du capteur utilisé.

Par exemple, dans le cas d'un objet avec une forme d'onde de type modulation linéaire en modulation PSK8 de vitesse de modulation V, l'identification nécessite 500 symboles et donc $T_{Objet}$ est égale au ratio 500/V. Soit pour une vitesse de modulation de 24 kbauds, $T_{Objet}$ = 20.83 ms

De manière générale, la durée d'écoute $T_{Objet}$ varie de 10 à 400 ms, ces valeurs étant données à titre illustratif et nullement limitatif.

*Détermination du temps de revisite des objets*

Pour chaque objet i du plan de veille, la durée de revisite optimale est calculée afin de permettre son interception avec une probabilité d'interception POI donnée ainsi que la caractérisation de l'accès réseau. Cette durée de revisite

$TR_{Objeti}$ est déterminée par le processeur 22 à partir de la table mémorisée dans la mémoire 23 du dispositif selon l'invention.

Le temps minimum de revisite pour un objet dépend du type de l'accès réseau de l'objet et des caractériques temporelles de cet accès. Les types d'accès réseau considérés sont les suivants : FF par alternat, EVF lente, TDMA/burst, EVF rapide.

A titre indicatif une méthode de calcul des temps de revisite dans le cas des différents types d'accès réseau :

o dans le cas d'un accès réseau de type FF par alternat, le temps de revisite de l'objet correspond typiquement à 20% de la durée de l'alternat. Ce temps de revisite assure une probabilité d'interception de 100% ainsi que la mesure du temps de début et fin de l'alternat ;

o dans le cas d'un accès réseau de type EVF lente, le temps de revisite de l'objet correspond également à 20% de la durée des paliers. Ce temps de revisite assure une probabilité d'interception de 100% sur chaque palier ainsi que la mesure du temps de début et fin du palier ;

o dans le cas d'un accès réseau de type TDMA/burst, le temps de revisite correspond typiquement à la durée du créneau temporel ou burst afin d'assurer une POI de 100% sur le burst (la POI est en effet donnée par le rapport Durée Burst/Temps de revisite) ;

o dans le cas d'un accès de type EVF rapide, le temps de revisite correspond typiquement à 10 fois la durée du palier afin d'assurer une POI de 10% qui est suffisante pour la caractisation des EVFs rapides.

Par exemple, dans le cas d'un objet dont l'accès au réseau est de type EVF lente (avec les caractéristiques techniques suivantes : vitesse de saut égale à 100 saut/s et de durée de palier (Dp) égale à 90 ms), le temps de revisite $TR_{Objet}$ est égale à 0,2*Dp soit 18 ms.

De manière générale la durée de revisite varie typiquement entre 10 ms et 100 ms. Ces valeurs sont données à titre illustratif et nullement limitatif.

*Détermination de la durée d'écoute des BAIs*

La durée d'écoute Tj d'une BAI doit être adaptée aux différents objets appartenant à cette BAI. L'adaptation consiste à prendre le maximum des durées d'écoute de chaque objet appartenant à la BAI ce qui peut s'écrire :

$$(4)\ \text{Tj} = Max_{Objet}\{T_{Objet}\}$$

avec Objet $\subset$ BAI où $\{T_{Objet}\}$ est l'ensemble des valeurs de temps d'écoute adaptée pour tous les objets du plan de veille.

*Détermination du temps de revisite des BAIs*

Le temps de revisite TRj pour une bande d'analyse instantanée BAI doit être adapté aux différents objets appartenant à cette BAI. L'adaptation consiste à prendre le maximum des temps de revisite de chaque objet appartenant à la BAI ce qui peut s'écrire :

$$(5)\ \text{TRj} = Max_{Objet}\{TR_{Objet}\}$$

avec Objet $\subset$ BAI où $\{TR_{Objet}\}$ est l'ensemble des valeurs de temps de revisite adapté pour tous les objets du plan de veille.

*Détermination des priorités des BAI*

La priorité correspond au nombre de revisite de la BAI sur la durée $T_{SEQ}$ de la séquence de balayage.

La priorité est donc fixée afin de maîtriser le nombre de revisite et donc le temps de revisite moyen égal au ratio $T_{seq}$/PRIO. La priorité minimale est de 1 (1 revisite par séquence), maximale de 10 (10 revisites par séquence).

La priorité dépend du type d'accès réseau de l'objet, une manière de procéder est décrite ci-après :

o Pour un accès réseau de type FF par alternat, pour laquelle la POI est de 100% quelque soit le nombre de revisite, la priorité est minimale et vaut 1 ;

o Pour un accès réeau de type EVF lent, la priorité est également de 1 ;

o Pour un accès réseau de type EVF rapide,:la priorité est calculée de manière à ce que l'on revienne au moins une fois sur l'EVF toutes les secondes ;
o Pour un accès réseau de type burst (emission sous forme de créneaux temporels ou « burstée »), la priorité est calculée de manière à ce que l'on revienne plus d'une fois par seconde sur l'émission bursté

La priorité d'une bande doit être adaptée aux différents objets appartenant à cette BAI. L'adaptation consiste à prendre le maximum des priorités de chaque objet appartenant à la BAI.

*Détermination de la séquence optimale*

A l'issue des étapes précédentes, le procédé dispose d'une liste de L bandes d'analyse, BAI, et pour chaque bande d'analyse des paramètres suivants : la fréquence centrale, la largeur de bande, la durée d'écoute, le temps de revisite, la priorité:

$$(6)\ \{F_j,\ B_j,\ PRIO_j,\ T_j,\ TR_j\}\ j=1,$$

L avec pour une bande d'analyse BAIj

- ∘ Fj la fréquence centrale qui est donnée par le découpage en bande capteur,
- ∘ Bj la largeur de bande donnée par le capteur,
- ∘ PRIOj la Priorité de la BAIj déterminé par le procédé selon l'invention,
- ∘ Tj la durée d'écoute déterminée par le procédé selon l'invention,
- ∘ TRj le temps de revisite déterminé par le procédé selon l'invention.

Il s'agit ensuite de déterminer un ordonnancement temporel de M bandes d'analyse BAI (M supérieur ou égal à L) afin d'obtenir une séquence temporelle Tseq de BAI optimisée vérifiant notamment les trois points suivants:

- ∘ La séquence comporte l'ensemble des éléments de la liste des bandes d'analyse,
- ∘ La durée de la séquence Tseq est inférieure à une durée $TSEQ_{Max,}$
- ∘ Les bandes sont revisitées au prorata de la priorité donnée par le référentiel technique.

La construction de cette séquence fait appel à des algorithmes classiques d'allocation optimale de ressources (Relaxation lagrangienne, heuristique bien connus de l'Homme du métier).
Dès que la somme des durées d'écoute est supérieure à l'un des temps de revisite, une seule séquence ne peut permettre de respecter les consignes en Tj et TRj. Compte tenu des ordres de grandeux des durées d'écoute et des temps de revisite, ce cas est le cas général.
Deux séquences sont donc construites en utilisant les deux voies de réception:

o Une séquence optimale « d'un point de vue de la durée d'écoute » : cette séquence optimise les performances d'identification,
o Une séquence optimale « d'un point de vue du temps de revisite » : cette séquence optimise les performances de POI et de caractérisation de l'accès réseau.

*Détermination de la séquence optimale sur le paramètre durée d'écoute*

Une séquence simple à construire est la séquence composée de la succession des L BAI : SEQ = F1,F2,....,FL. Par contre elle ne vérifie pas le point sur le respect des priorités. Pour ce faire, chaque BAI doit être répétée $Prio_i$ fois dans la séquence. La séquence ainsi définie est notée S = F1($Prio_1$), F2($Prio_2$), , F3($Prio_3$). Cette séquence possède les caractéristiques suivantes :

- ∘ Le nombre d'élément de la séquence est égale à $M = \sum_{j=1}^{L} prio_k$
- ∘ La durée de la séquence $T_{seq}$ est égale à $\sum_{j=1}^{L} Prio_i * T_i$
- ∘ Toute permutation des M éléments de la séquence constitue une séquence qui vérifie aussi les points énoncés: Il y a donc M! solutions

Parmi ces solutions, la solution choisie est celle qui va optimiser la probabilité d'interception des objets. Sans connaissance à priori sur la durée des communications et le nombre d'appel, la séquence optimale doit vérifier le point complémentaire suivant : les trames revisitées doivent être équiréparties dans la séquence ce qui peut s'écrire : $TR_j = T_{seq}/Prio_j$ ( le temps de revisite moyen correspond à la durée de la séquence divisée par la priorité).

Par exemple, soit les K=10 bandes avec les priorités respectives suivantes = [1, 1, 2, 2, 3, 3, 2, 2, 1, 1] alors la séquence optimale calculée par l'algorithme précédent a la longueur M=18 et s'écrit :

Seq = F5, F6, F3, F4, F7, F8, F5, F6, F1, F2, F9, F10, F5, F6, F3, F4, F7, F8

*Détermination de la séquence optimale sur le paramètre temps de revisite*

Le but de cette séquence étant d'optimiser la POI, la durée d'écoute est alors fixée avec la valeur minimale d'écoute que permet le capteur. Cette valeur minimale est notée Tmin.

La construction de cette séquence nécessite que les différents temps de revisite soient des multiples. En effet si les temps de revisite ne sont pas des multiples, la séquence construite par l'algorithme pourra montrer des chevauchements temporels des bandes instantanées ce qui n'est physiquement pas réalisable.

Pour éviter les chevauchements entre les trames d'écoute ou durée d'écoute Tj, le procédé réalise en entrée une projection des temps de revisite des L bandes instantanées sur une base de temps ayant les bonnes propriétés pour éviter les chevauchements temporels. Pour cela les valeurs de cette base de temps doivent être des multiples l'un de l'autre. Cette base de temps est donc de la forme $2^k \times Tmin$ avec k=1 à K soit 2Tmin, 4Tmin, 8Tmin., .....

Par exemple dans le cas où Tmin est égale à 1ms, la base de temps est 2 , 4, 8, 32, 64 , 128 ms. Un temps de revisite de 70 ms sera projeté sur la valeur juste inférieure de cette base soit 64 ms dans le cas ci-dessus

Dans le cas d'un procédé de goniométrie, la durée minimale d'écoute est donnée par la durée minimale de goniométrie (Tgon) et la base de temps pour déterminer les temps de revisite pour chacune des bandes instantanées correspond à un multiple deTgon puis, les temps de revisite TRj sont ensuite définis comme des multiples 2xTgon, 4xTgon, etc.

*Validation de la séquence*

Le critère de validation de la séquence est sa durée. Le processeur va comparer la valeur de la durée de la séquence Tseq trouvée avec une valeur seuil prédéfinie $T_{seqmax}$. Si la valeur $T_{seq}$ est supérieure à la valeur seuil, alors, le procédé va :

 o diminuer la priorité d'une bande et le temps de revisite associé, et/ou

 o diminuer la durée d'écoute d'une bande c'est-à-dire supprimer un des objets d'intérêt dans le calcul de la durée d'écoute. L' objet retiré est l' objet la plus pénalisante en terme de durée d'écoute.

puis revenir aux étapes précédentes.

Le procédé et le dispositif selon l'invention offrent notamment les avantages suivants ; une amélioration de la probabilité d'interception, une amélioration des performances de caractérisation et d'identification des objets du fait que les paramètres de durée d'écoute et de durée de revisite sont déterminées en tenant compte des objets à surveiller.

**Revendications**

1. - Procédé pour déterminer des paramètres de surveillance d'un ensemble de bandes instantanées d'analyse BAIj dans un système (20) comprenant au moins deux objets à surveiller et ayant en mémoire (23) au moins les caractéristiques des modes d'émission desdits objets et au moins un récepteur (21) comprenant au moins deux voies de réception, adapté à recevoir et analyser les signaux reçus **caractérisé en ce qu'**il comporte au moins les étapes suivantes :

 a) découper un « plan de veille » en L bandes instantanées d'analyse BAIj,

 b) déterminer la durée d'écoute $T_{Objeti}$ et déterminer le temps de revisite $TR_{Objeti}$ pour chacun des objets à surveiller en utilisant des informations de forme d'onde et du type d'accès réseau associées aux objets à surveiller contenues dans un référentiel technique (23),

 c) déterminer ensuite la durée d'écoute Tj et le temps de revisite TRj optimal pour chacune desdites bandes instantanées d'analyse BAIj en utilisant les valeurs des durées d'écoute $T_{Objeti}$ et des temps de revisite $TR_{Objeti}$ des objets appartenant à ladite bande instantanée d'analyse BAIj,

 d) déterminer un niveau de priorité pour chaque bande instantanée BAIj en fonction du type d'accès réseau des objets appartenant à la bande instantané d'analyse BAIj,

e) lorsque la somme des durées d'écoute Tj des bandes instantanées d'analyse BAIj est inférieure ou égale à chaque temps de revisite TRj des bandes instantanées d'analyse BAIj, déterminer un ordonnancement temporel de M bandes instantanées d'analyse, avec M supérieur ou égal à L, afin d'obtenir une séquence temporelle des bandes instantanées d'analyse optimale par rapport aux durées d'écoute Tj et temps de revisite TRj, et comportant l'ensemble des L bandes,

f) lorsque la somme des durées d'écoute Tj des bandes instantanées d'analyse BAIj est supérieure à au moins un des temps de revisite TRj des bandes instantanées d'analyse BAIj, déterminer deux ordonnancements temporels de M bandes instantanées d'analyse, avec M supérieur ou égal à L, afin d'obtenir :

- une première séquence optimale pour le paramètre de la durée d'écoute Tj, dans lequel chaque bande instantanée d'analyse est revisitée un nombre de fois égal à sa priorité,
- une deuxième séquence optimale pour le paramètre du temps de revisite TRj, dans lequel la durée d'écoute des M bandes instantanées d'analyse correspond à une valeur minimale Tmin d'écoute du récepteur,

la première séquence étant mise en œuvre sur une première voie de réception, et la deuxième séquence étant mise en œuvre sur une deuxième voie de réception.

2. - Procédé selon la revendication 1, dans lequel le calcul de la deuxième séquence optimale pour le temps de revisite TRj comprend la projection des temps de revisite des M bandes instantanées d'analyse sur une base de temps de la forme $2^k*Tmin$.

3. - Procédé selon l'une des revendications 1 ou 2,dans lequel lorsque la durée Tseq de la ou des séquences est supérieure à une valeur seuil maximale, la priorité et le temps de revisite d'une bande instantanée d'analyse sont diminués, puis le procédé de nouveau exécuté.

4. - Procédé selon l'une des revendications 1 à 3, dans lequel lorsque la durée $T_{seq}$ de la ou des séquences est supérieure à une valeur seuil maximale, la durée d'écoute d'une bande instantanée d'analyse est diminuée en supprimant l'objet à surveiller ayant la durée d'écoute Tj la plus élevée, puis le procédé de nouveau executé.

5. - Système (20) comprenant au moins deux objets à surveiller et ayant en mémoire (23) au moins les caractéristiques des modes d'émission desdits objets et au moins un récepteur (21, 25) comprenant au moins deux voies de réception, adapté à recevoir et analyser les signaux reçus, et **caractérisé en ce qu'**il comporte un processeur (22) adapté à exécuter les étapes du procédé selon l'une des revendications 1 à 4.

6. - Système selon la revendication 5 **caractérisé en ce que** les objets à suveiller sont adaptés à émettre dans la bande de fréquence [30MHz, 88MHz].

**Patentansprüche**

1. Verfahren zum Bestimmen von Überwachungsparametern einer Gesamtheit von Momentananalysebändern BAIj in einem System (20), umfassend mindestens zwei zu überwachende Objekte und aufweisend im Speicher (23) mindestens die Kennzeichen der Übertragungsmodi der Objekte und mindestens einen Empfänger (21), der mindestens zwei Empfangskanäle umfasst und der dazu geeignet ist, die empfangenen Signale zu empfangen und zu analysieren, **dadurch gekennzeichnet, dass** es mindestens die folgenden Schritte aufweist:

a) Teilen eines "Beobachtungsplans" in L Momentananalysebänder BAIj,

b) Bestimmen der Hördauer $T_{Objeti}$ und Bestimmen der Neuuntersuchungszeit $TR_{Objeti}$ für jedes der zu überwachenden Objekte unter Verwendung von Informationen zu Wellenform und Netzzugangstyp, die den zu überwachenden Objekten zugeordnet sind, die in einem technischen Bezugssystem (23) enthalten sind,

c) anschließend Bestimmen der Hördauer Tj und der für jede der Momentananalysebänder BAIj optimalen Neuuntersuchungszeit TRj unter Verwendung der Werte der Hördauern $T_{Objeti}$ und der Neuuntersuchungszeiten $TR_{Objeti}$ der Objekte, die zu dem Momentananalyseband BAIj gehören,

d) Bestimmen einer Prioritätsstufe für jedes Momentanband BAIj in Abhängigkeit vom Netzzugangstyp der Objekte, die zu dem Momentananalyseband BAIj gehören,

e) wenn die Summe der Hördauern Tj der Momentananalysebänder BAIj bei jeder Neuuntersuchungszeit TRj der Momentananalysebänder BAIj kleiner oder gleich ist, Bestimmen einer zeitlichen Ablaufplanung von M Momentananalysebändern, wobei M größer als oder gleich L ist, um eine in Bezug auf die Hördauern Tj und die Neuuntersuchungszeiten TRj optimale zeitliche Sequenz von Momentananalysebändern zu erhalten, und beinhaltend die Gesamtheit der L Bänder,

f) wenn die Summe der Hördauern Tj der Momentananalysebänder BAIj größer als mindestens eine der Neuuntersuchungszeiten TRj der Momentananalysebänder BAIj ist, Bestimmen von zwei zeitlichen Ablaufplanungen von M Momentananalysebändern, wobei M größer als oder gleich L ist, um Folgendes zu erhalten:

• eine erste für den Parameter der Hördauer Tj optimale Sequenz, wobei jedes Momentananalyseband eine Anzahl von Malen entsprechend seiner Priorität neu untersucht wird,
• eine zweite für den Parameter der Neuuntersuchungszeit TRj optimale Sequenz, wobei die Hördauer der M Momentananalysebänder einem minimalen Hörwert Tmin des Empfängers entspricht,

wobei die erste Sequenz auf einem ersten Empfangskanal implementiert wird und die zweite Sequenz auf einem zweiten Empfangskanal implementiert wird.

2. Verfahren nach Anspruch 1, wobei das Berechnen der zweiten für die Neuuntersuchungszeit TRj optimalen Sequenz die Projektion der Neuuntersuchungszeiten der M Momentananalysebänder auf eine Messlinie der Form $2^k \times Tmin$ umfasst.

3. Verfahren nach einem der Ansprüche 1 oder 2, wobei, wenn die Dauer Tseq der Sequenz oder Sequenzen über einem maximalen Schwellenwert liegt, die Priorität und die Neuuntersuchungszeit eines Momentananalysebandes verringert werden, woraufhin das Verfahren erneut ausgeführt wird.

4. Verfahren nach einem der Ansprüche 1 bis 3, wobei, wenn die Dauer $T_{seq}$ der Sequenz oder Sequenzen über einem maximalen Schwellenwert liegt, die Hördauer eines Momentananalysebandes verringert wird, indem das zu überwachende Objekt, das die höchste Hördauer Tj aufweist, gelöscht wird, woraufhin das Verfahren erneut ausgeführt wird.

5. System (20), umfassend mindestens zwei zu überwachende Objekte und aufweisend im Speicher (23) mindestens die Kennzeichen der Übertragungsmodi der Objekte und mindestens einen Empfänger (21,25), der mindestens zwei Empfangskanäle umfasst und der dazu geeignet ist, die empfangenen Signale zu empfangen und zu analysieren, und **dadurch gekennzeichnet, dass** es einen Prozessor (22) aufweist, der dazu geeignet ist, die Schritte des Verfahrens nach einem der Ansprüche 1 bis 4 auszuführen.

6. System nach Anspruch 5, **dadurch gekennzeichnet, dass** die zu überwachenden Objekte dazu geeignet sind, auf dem Frequenzband [30 MHz, 88 MHz] zu übertragen.

**Claims**

1. A method for determining monitoring parameters of a set of instantaneous analysis bands IABj in a system (20) comprising at least two objects to monitor and having in memory (23) at least the characteristics of the modes of emission of said objects and at least one receiver (21) comprising at least two reception channels and adapted for receiving and analysing the signals received, **characterised in that** it has at least the following steps:

a) slicing a "monitoring plan" into L instantaneous analysis bands IABj,
b) determining the duration of listening $T_{Objecti}$ and determining the revisit time $TR_{Objecti}$ for each of the objects to monitor by using waveform information and network access type which are associated with the objects to monitor and are contained in a technical repository (23),
c) thereafter determining the duration of listening Tj and the revisit time RTj which is optimal for each of said instantaneous analysis bands IABj by using the values of the durations of listening $T_{Objecti}$ and of the revisit times $TR_{Objecti}$ of the objects belonging to said instantaneous analysis bands IABj,
d) determining a level of priority for each instantaneous band IABj as a function of the type of network access of the objects belonging to the instantaneous analysis bands IABj,
e) when the sum of the durations of listening Tj of the instantaneous analysis bands IABj is lower or equal to each revisit time RTj of the instantaneous analysis bands IABj, determining a temporal scheduling of M instantaneous analysis bands, with M greater than or equal to L, so as to obtain a temporal sequence of the instantaneous analysis bands which is optimal with regards to the durations of listening Tj and the revisit time RTj, and containing the set of L bands,

f) when the sum of the durations of listening Tj of the instantaneous analysis bands IABj is greater than at least one of the revisit times RTj of the instantaneous analysis bands IABj, determining two temporal scheduling of M instantaneous analysis bands, with M greater than or equal to L, so as to obtain:

- a first sequence which is optimal for the parameter of the duration of listening Tj, wherein each instantaneous analysis bands is revisited a number of time which is egal to its priority,
- a second sequence which is optimal for the parameter of the revisit time RTj, wherein the duration of listening of the M instantaneous analysis bands corresponds to a minimum receiver listening value Tmin,

the first sequence being implemented over a first reception channel, and the second sequence being implemented over a second reception channel.

2. The method according to claim 1, wherein the computation of the calculation of the second optimal sequence for the revisit time RTj comprises the projection of the revisit times of the M instantaneous analysis bands onto a time base, the form of which is $2^k \times$ Tmin.

3. The method according to one of claim 1 or 2, wherein when the duration Tseq of the one or more sequences is greater than a maximum threshold value, the priority and revisit time of an instantaneous analysis band are decreased, then the method is carried out again.

4. The method according to any one of claims 1 to 3, wherein when the duration $T_{seq}$ of the one or more sequences is greater than a maximum threshold value, the duration of listening of an instantaneous analysis bands is decreased by removing the object to monitor having the highest duration of listening Tj, then the method is carried out again.

5. A system (20) comprising at least two objects to monitor and having in memory (23) at least the characteristics of the modes of emission of said objects and at least one receiver (21, 25) comprising at least two reception channels and adapted for receiving and analysing the signals received, and **characterised in that** it has a processor (22) adapted for executing the steps of the method according to one of claims 1 to 4.

6. The system according to claim 5, **characterised in that** the objects to monitor are adapted to emit in the frequency band [30 MHz, 88 MHz].

FIG.1

FIG.2

FIG.3

FIG.4

**RÉFÉRENCES CITÉES DANS LA DESCRIPTION**

**Documents brevets cités dans la description**

- US 2006227035 A
- US 20100027715 A